# EUROPEAN PATENT SPECIFICATION

(11) **EP 2 070 765 B1**
(45) Date of publication and mention of the grant of the patent: **28.08.2013**
(21) Application number: 07834488.4
(22) Date of filing: 06.09.2007
(51) Int. Cl.: B60R 1/08

(54) **REAR-VIEW MIRROR FOR IMPROVING A DRIVER'S VISION IN A CAR OR MOTOR VEHICLE**
RÜCKSPIEGEL ZUR VERBESSERTEN SICHT FÜR DEN FAHRER EINES AUTOS ODER MOTORFAHRZEUGS
RETROVISEUR PERMETTANT D'AMELIORER LA CAPACITE VISUELLE DES CONDUCTEURS DE VOITURES ET DE VEHICULES AUTOMOBILES

(30) Priority: 06.09.2006 IT LU20060004
(43) Date of publication of application: 17.06.2009
(73) Proprietor: Cortez Ruiz, Lourdes, C.P. 14420 México, D.F. (MX)
(72) Inventor: Cortez Ruiz, Lourdes, C.P. 14420 México, D.F. (MX)
(74) Representative: ABG Patentes, S.L.
(86) International application number: PCT/MX2007/000107
(87) International publication number: WO 2008/030078

(56) References cited:
- DE-A1- 3 502 203
- DE-A1- 3 502 203
- DE-A1- 3 633 693
- FR-A- 1 416 590
- FR-A3- 2 818 212
- FR-E- 62 366
- JP-U- 50 140 151
- US-A- 4 832 476
- US-A- 5 946 150
- US-A1- 2004 195 486
- US-B1- 6 312 133
- US-B1- 6 588 911

## Description

In general, this rear-view mirror assembly is focused on the interaction MAN-AUTOMEDIA-SURROUNDING ENVIROMENT and aims to avoid the typical drawbacks of traditional rear-view mirrors, since when using traditional rear-view mirrors, the driver looses the frontal vision when he turns the head to see the external mirror at the right side.

This object is achieved by a rear-view mirror assembly exhibiting the features described in independent claim 1.

JP140515 discloses a rear view mirror assembly.

FR62366 discloses a rear view mirror assembly comprising a pair of reflecting mirror pieces disposed in the front face of corresponding rectangular frames, an attaching means for attachment to the windshield and a joint device which pivotally connects the frames in one of its lateral ends by means of a pair of spherical pieces which couple with a sphere receiving means located in the frames.

Document DE 3502203 describes a mirror assembly comprising a pair of frameworks having an upper end, a lower end and two lateral ends, a front face and a rear face and an attaching means for attaching the assembly to a windshield; a pair of reflecting mirror pieces, each of them disposed in the front face of its corresponding framework; a joint device comprising an axis and a sphere piece disposed in each end of the axis, the joint device pivotally connecting the frameworks by means of the coupling of the sphere pieces with a sphere receiving means located in one of the lateral ends of each framework. One of the frames is smaller than the other and from the receiving cavities protrude the lateral edge of the frames forming a large space between the frames that is wasted by not having a mirror in this space and causing bad appearance, so it is needed to cover it with a protective sleeve or element.

The created rear-view mirror represents an advantage over the current ones by presenting two mirrors with a PVC structure, which are preferably of the same measure, joined by a PVC articulation allowing to perform lateral and frontal movements from the interior of the vehicle to be able to see the rear zone and the right rear lateral external zone, with respect to the vehicle.

This innovation proposes to have two mirrors of the same measure joined in a way such as a pair of eyeglasses. The two joined mirrors provide separate vision of the surrounding perspective of the rear zone and the right rear lateral external zone while occupying half of the width of the windshield's upper zone (P) in the driver's side.

The coupling between the two mirrors is made by means of a PVC hinge formed by two spheres and an axis placed in the interior of the PVC structure of every mirror allowing to make the rotation movement to adapt it to the visual height of the driver who, from the interior of the vehicle will be able to set by means of the left mirror preferably, evident by means of a yellow frame, the side of the right external surrounding area while the right mirror effects the same function as the conventional rear-view mirrors.

The insertion of the mirrors in the PVC structure will be achieved by means of warming to be able to expand the plastic and using pressure to insert the mirrors The installation of the mirrors on the windshield will be by means of a cylinder having a sphere in its interior which is articulated by an axis with the other sphere inside the structure of the mirror so as to allow movement in frontal and side directions; the double mirror will be fixed with transparent silicon in the windshield as it is done at present in the rear-view mirrors.

This innovative accessory allows to use two mirrors divided by means of the hinge and the frame of the left mirror in yellow color, applying the same principle as the international norms which gives to this color the function to prevent on danger, achieving to divide in this way two zones corresponding to the rear zone and rear right zone from the interior of the vehicle, without losing the frontal vision. The same principle of the duplicity of the mirrors can be extended by making suitable modifications to the assembly and dimensions in accordance with the diversity of existing vehicles as: motor motorcycle, Motorini, truck bus, pullman, etc.

Thanks to the present innovation the before mentioned loss of frontal visibility problem is eliminated because of the driver has the double mirror at the interior of the vehicle, avoiding turning the head; the driver can set it at his visual height and it can be adapted to the dimension of the automobile with an ideal visibility from 15° to 60° without losing the frontal vision and obtaining the perception of the real distance between his transportation means and the ones surrounding the right rear external side remaining unaltered the function of the right rear-view mirror.

The international norm states that the side mirror generally located on the right external side of the transportation means; " The reflected images are actually closer than they appear" while in the present rear-view mirror the reflected images appear at the real distance.

The design of the double mirror also allows eliminating the solar reflex replacing the function of the fin or visor against the straight-ahead sun and it can be used at the top left part respective to the driver.

These and other advantages are typical of this innovative accessory and they will be better appreciated by the skilled technicians in this field thanks to the description of the attached drawings annexed to this description in a simplified way although not limitative in the design.

### BRIEF DESCRIPTION OF DRAWINGS

Figure 1 shows a top view of a vehicle and the visual field provided by the rear view mirror assembly of the invention, rear-view (VP) and right side rear-view (VPLD).
Figure 2 shows a front and a top view of the rear view mirror assembly with the frames aligned.
Figure 3 shows an embodiment of the external structure of the rear view mirror assembly.
Figure 4 shows views of the framework and the hinge for assembling.
Figure 5 shows an embodiment of the rear view mirror assembly with flat framework.
Figure 6 shows an embodiment of the rear view mirror assembly with hollow framework.
Figure 7 shows two embodiments of the rear view mirror assembly, one as a finished rear view mirror and the other or as an addition to an existing rear-view mirror.

### DETAILED DESCRIPTION OF THE INVENTION

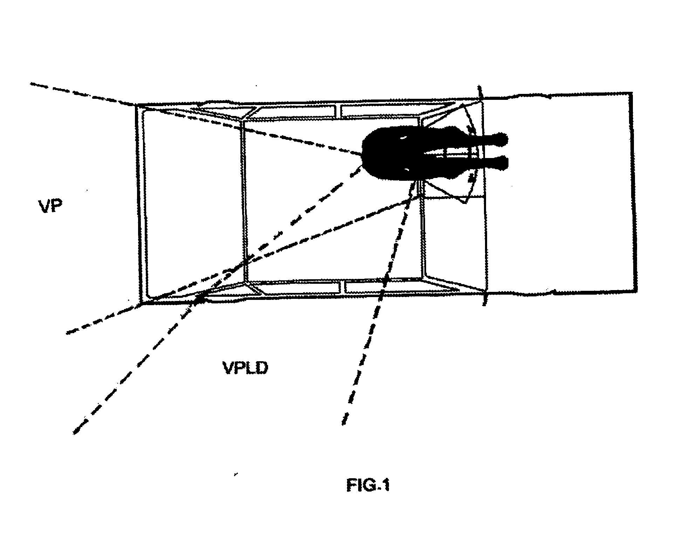

Figure 1 shows the visual zones in the two mirrors of the rear view mirror assembly from the interior of the automobile: rear-view (VP) provided by the mirror in the right framework (1') and right side rear-view (VPLD) provided by the mirror in the left framework.

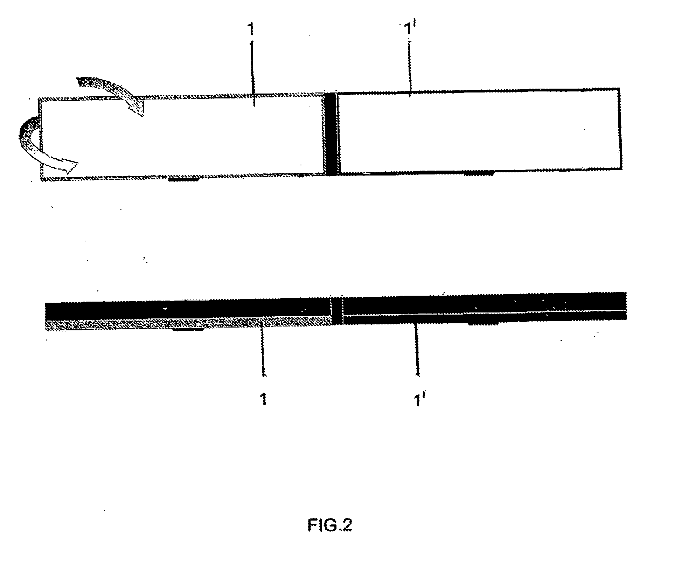

Figure 2 represents a front view and a top view of a rear view mirror assembly according to the invention. The arrows indicate the frontal and side movements possible for the rear view mirror assembly.

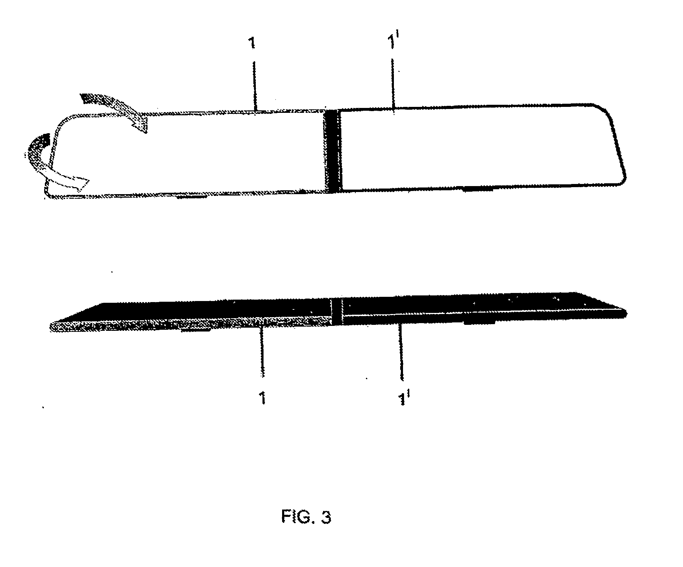

Figure 3 shows an embodiment of the external structure of the rear view mirror assembly.

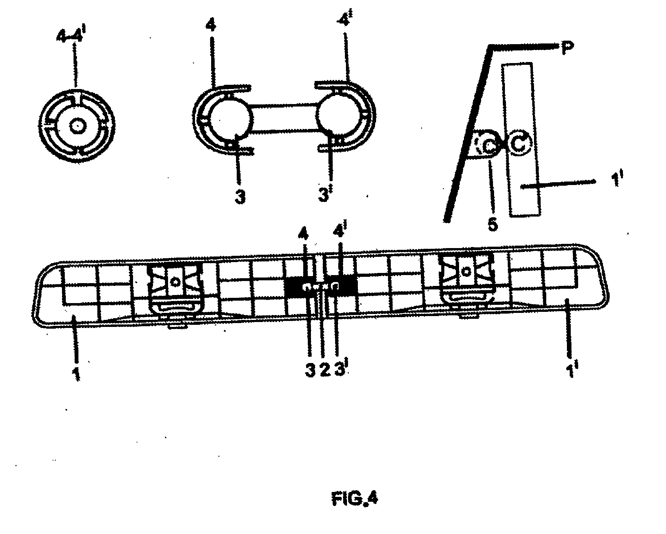

Figure 4 shows the framework made in PVC (1-1'). The PVC hinge for assembling (2) is formed by an axis crossing the central structure and joins the frameworks (1-1') of the two mirrors by means of two spheres (3-3'), one in every end of the axis, housed at their corresponding cavity (4-4') disposed in every framework (1-1'); this hinge allows achieving rotation of each of two mirrors in the central part of the device, that is to say in the part between two frameworks (1-1'), as the driver decides to adapt it.

The PVC hinge (5) for fixing the rear view mirror assembly to the windshield has the same structure as current rear-view mirrors, that is a cylinder cut on a side drawing an inclination as the windshield (P) and two opposite spheres (C-C') one sphere (C') is housed under pressure in the cut cylinder, and the other sphere (C) is inserted by pressure only in the rear part of one of the frameworks (1-1') for example in framework 1'. The hinge (5) helps to fix it to the interior of the windshield.

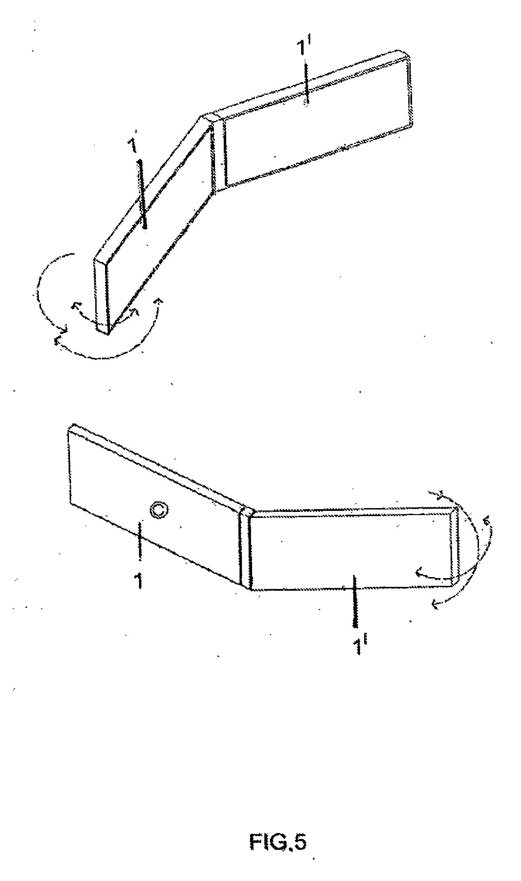

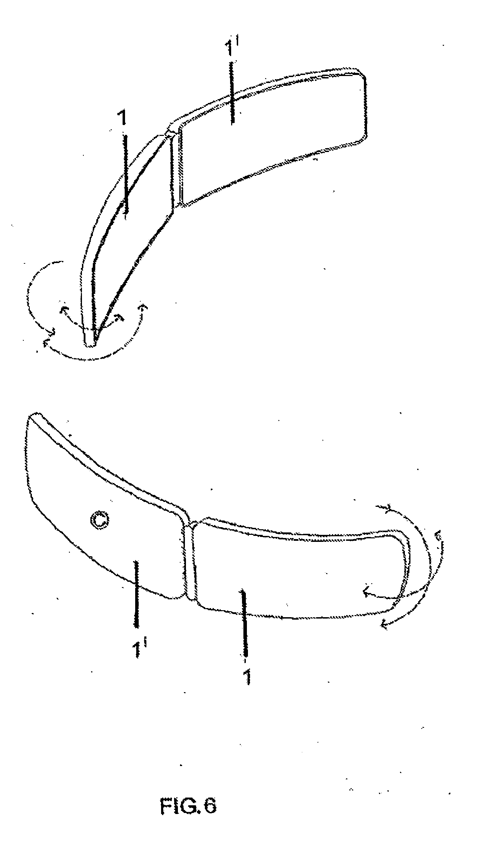

Figures 5 and 6 represent two embodiments of the rear view mirror assembly, one showing a flat framework (1-1') and the other one a hollow framework (1-1') that always follow the same principle. The structure can also change according to the automobile design.

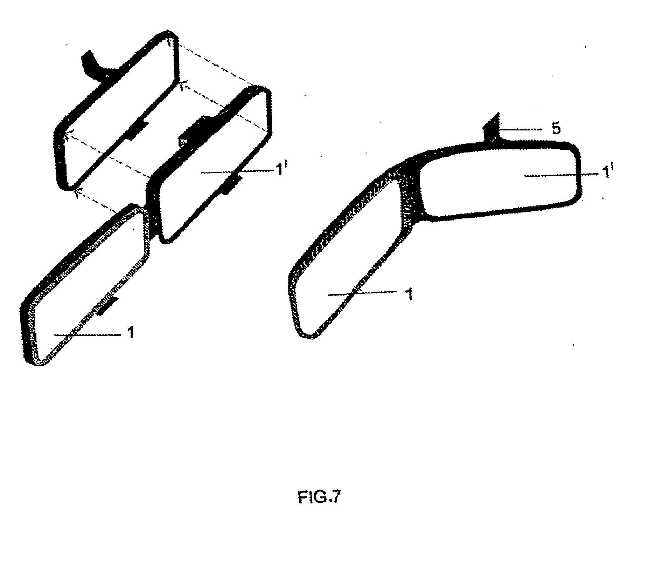

Figure 7 shows two embodiments of the rear view mirror assembly, one as a finished innovation and the other as an addition to an existing rear-view mirror having a frame fixed by pressure framing the mirror with a framework (1') thereby obtaining the rear real visibility (VP triangle in figure 1); with the mirror of the other framework (1) visibility of the right rear side is achieved (VPLD in figure 1). Hinges (3-3 '-C) allow regulating the system previously described as desired based on the visual height of the driver and the design of the vehicle.

In the practice a skilled technician can make changes in an equivalent way to the form, dimension, disposition of the singular elements and nature of the materials used.

## Claims

1. A rear view mirror assembly comprising:
a pair of frameworks (1, 1') having an upper end, a lower end and two lateral ends, a front face and a rear face, the frameworks (1, 1') having the same dimensions;
an attaching means, for attaching the assembly to a windshield, disposed in the back face of one of the frameworks (1, 1');
a pair of reflecting mirror pieces, each of them disposed in the front face of its corresponding framework (1, 1');
a joint device (2) comprising an axis and a sphere piece (3, 3') disposed in each end of the axis, the joint device (2) pivotally connecting the frameworks (1, 1') by means of the coupling of the sphere pieces (3, 3') with a sphere receiving means (4, 4') located in one of the lateral ends of each framework (1, 1');and
a central part disposed between the frameworks (1, 1') and transversally to the axis in such manner that the axis crosses through the central part,
the two mirrors being dimensioned such that they occupy half of the width of the windshield's upper zone in the driver's side.

2. A rear view mirror assembly according to claim 1, wherein the framework (1) of the left mirror is painted in yellow.

3. A rear view mirror assembly according to claim 2, wherein the framework (1) of the mirror painted in yellow is configured to provide right side rear-view to the driver.

4. A rear view mirror assembly according to any of the previous claims, wherein the joint device (2) and/or the frameworks (1, 1') are made of PVC.

5. A rear view mirror assembly according to any of the previous claims, the rear view mirror assembly being configured to be attached to the windshield over a pre-existing rear view mirror.

6. A rear view mirror assembly according to any of the previous claims, wherein the frameworks (1, 1') are flat.

7. A rear view mirror assembly according to any of claims 1-5, wherein the frameworks (1, 1')are hollow.

8. Vehicle comprising a rear view mirror assembly according to any of the previous claims, the rear view mirror assembly being attached to the windshield's upper zone in the driver's side, occupying half of the width of the windshield in the driver's side.

9. Vehicle according to claim 8, the rear view mirror assembly being configured to provide a driver with a rear view by means of the mirror in the right framework (1').

10. Vehicle according to claim 8 or 9, the rear view mirror assembly being configured to provide a driver with a right rear lateral external view by means of the mirror in the left framework (1).

## Patentansprüche

1. Rückspiegel-Baugruppe mit:
einem Paar von Rahmen (1, 1') mit einem oberen Ende, einem unteren Ende und zwei seitlichen Enden, einer vorderen Fläche und
einer hinteren Fläche, wobei die Rahmen (1, 1') dieselben Abmessungen haben;
eine Befestigungseinrichtung zum Befestigen der Baugruppe an einer Windschutzscheibe, die sich auf der Rückseite eines der Rahmen (1, 1') befindet;
einem Paar von reflektierenden Spiegelteilen, die sich jeweils auf der vorderen Fläche des entsprechenden Rahmens (1, 1') befinden;
eine Gelenkvorrichtung (2), die eine Achse und ein Kugelteil (3, 3'), der sich jeweils am Ende der Achse befindet, umfasst, wobei die Gelenkvorrichtung (2) die Rahmen (1, 1') mittels der Kupplung der Kugelteile (3, 3') mit einer Kugelaufnahmeeinrichtung (4, 4'), die sich in einem der seitlichen Enden jedes Rahmens (1, 1') befindet, schwenkbar verbindet; und
einen zentralen Teil, der sich so zwischen den Rahmen (1, 1') und quer zur Achse befindet, dass die Achse den zentralen Teil kreuzt;
wobei die beiden Spiegel so dimensioniert sind, dass sie die Hälfte der Breite der oberen Zone der Windschutzscheibe auf der Fahrerseite einnehmen.

2. Rückspiegel-Baugruppe gemäß Anspruch 1, wobei der Rahmen (1) des linken Spiegels gelb lackiert ist.

3. Rückspiegel-Baugruppe gemäß Anspruch 2, wobei der Rahmen (1) des Spiegels, der gelb lackiert ist, so konfiguriert ist, dass er dem Fahrer eine rechtsseitige Rückwärtssicht gewährt.

4. Rückspiegel-Baugruppe gemäß einem der vorstehenden Ansprüche, wobei die Gelenkvorrichtung (2) und/oder die Rahmen (1, 1') aus PVC bestehen.

5. Rückspiegel-Baugruppe gemäß einem der vorstehenden Ansprüche, wobei die Rückspiegel-Baugruppe so konfiguriert ist, dass sie über einem bereits vorhandenen Rückspiegel an der Windschutzscheibe zu befestigen ist.

6. Rückspiegel-Baugruppe gemäß einem der vorstehenden Ansprüche, wobei die Rahmen (1, 1') flach sind.

7. Rückspiegel-Baugruppe gemäß einem der Ansprüche 1 bis 5, wobei die Rahmen (1, 1') hohl sind.

8. Fahrzeug, umfassend eine Rückspiegel-Baugruppe gemäß einem der vorstehenden Ansprüche, wobei die Rückspiegel-Baugruppe an der oberen Zone der Windschutzscheibe auf der Fahrerseite befestigt ist und die Hälfte der Breite der Windschutzscheibe auf der Fahrerseite einnimmt.

9. Fahrzeug gemäß Anspruch 8, wobei die Rückspiegel-Baugruppe so konfiguriert ist, dass sie einem Fahrer eine Rückwärtssicht mittels des Spiegels im rechten Rahmen (1') gewährt.

10. Fahrzeug gemäß Anspruch 8 oder 9, wobei die Rückspiegel-Baugruppe so konfiguriert ist, dass sie einem Fahrer eine rechts rückwärts seitlich nach außen gerichtete Sicht mittels des Spiegels im linken Rahmen (1) gewährt.

## Revendications

1. Assemblage de rétroviseur comprenant :
une paire de châssis (1, 1') ayant une extrémité supérieure, une extrémité inférieure et deux extrémités latérales, une face avant et une face arrière, les châssis (1, 1') ayant les mêmes dimensions,
un moyen de fixation pour fixer l'assemblage à un pare-brise, placé dans la face arrière de l'un des châssis (1, 1'),
une paire de pièces de miroir réfléchissant, chacune d'elles placée dans la face avant du châssis correspondant (1, 1'),
un dispositif de jonction (2) comprenant un axe et une pièce sphérique (3, 3') placée à chaque extrémité de l'axe, le dispositif de jonction (2) connectant les châssis (1, 1') de manière pivotante en couplant les pièces sphériques (3, 3') avec un moyen de réception de la sphère (4, 4') situé dans une des extrémités latérales de chaque châssis (1, 1'), et
une pièce centrale située entre les châssis (1, 1') et transversalement à l'axe de telle manière que l'axe traverse la pièce centrale,
les deux miroirs étant dimensionnés de manière à occuper la moitié de la largeur de la zone supérieure du pare-brise du côté du conducteur.

2. Assemblage de rétroviseur selon la revendication 1, dans lequel le châssis (1) du miroir de gauche est peint en jaune.

3. Assemblage de rétroviseur selon la revendication 2, dans lequel le châssis (1) du miroir peint en jaune est configuré pour fournir une vue arrière latérale droite au conducteur.

4. Assemblage de rétroviseur selon l'une quelconque des revendications précédentes, dans lequel le dispositif de jonction (2) et/ou les châssis (1, 1') sont réalisés en matériau PVC.

5. Assemblage de rétroviseur selon l'une quelconque des revendications précédentes, l'assemblage de rétroviseur étant configuré pour être fixé au pare-brise par-dessus un rétroviseur préexistant.

6. Assemblage de rétroviseur selon l'une quelconque des revendications précédentes, dans lequel les châssis (1, 1') sont plats.

7. Assemblage de rétroviseur selon l'une quelconque des revendications 1 à 5, dans lequel les châssis (1, 1') sont creux.

8. Véhicule comprenant un assemblage de rétroviseur selon l'une quelconque des revendications précédentes, l'assemblage de miroir rétroviseur étant fixé à la zone supérieure du pare-brise du côté du conducteur, occupant la moitié de la largeur du pare-brise du côté du conducteur.

9. Véhicule selon la revendication 8, l'assemblage de miroir rétroviseur étant configuré pour fournir au conducteur une vision arrière au moyen du miroir dans le châssis de droite (1').

10. Véhicule selon la revendication 8 ou 9, l'assemblage de miroir rétroviseur étant configuré pour fournir au conducteur une vision arrière latérale droite extérieure au moyen du miroir dans le châssis de gauche (1).
